# EUROPEAN PATENT APPLICATION

(11) **EP 4 387 297 A1**
(43) Date of publication of application: **19.06.2024**
(21) Application number: 21953152.2
(22) Date of filing: 12.08.2021
(51) Int. Cl.: H04W 8/24

(54) **METHOD AND APPARATUS FOR PERFORMING SMALL DATA TRANSMISSION, METHOD AND APPARATUS FOR DETERMINING RANDOM ACCESS MESSAGE TRANSMISSION MODE, DEVICE, AND STORAGE MEDIUM**

(71) Applicant: Beijing Xiaomi Mobile Software Co., Ltd., Beijing 100085 (CN)
(72) Inventor: MU, Qin, Beijing 100085 (CN); QIAO, Xuemei, Beijing 100085 (CN)
(74) Representative: Steinbauer, Florian
(86) International application number: PCT/CN2021/112357
(87) International publication number: WO 2023/015535

(57) **Abstract**

The present invention provides a method and apparatus for performing small data transmission, a method and apparatus for determining a random access message transmission mode, a device, and a storage medium. The method for performing small data transmission comprises: measuring the signal strength of a downlink signal; on the basis of whether a user equipment has a coverage enhancement (CE) capability, acquiring a signal strength threshold corresponding to the user equipment related to the small data transmission (SDT); and executing the SDT on the basis of the signal strength and the signal strength threshold.

## Description

### TECHNICAL FIELD

The present disclosure relates to the field of wireless communication technology, and in particular to methods, apparatuses and a device for performing small data transmission (SDT), methods, apparatuses and a device for determining a transmission method of a random access message, and a storage medium.

### BACKGROUND

Small data transmission (SDT) is supported in an inactive state, which means that data transmission can be completed without entering a connected state, so as to avoid wasting time-frequency resources, shorten data transmission latency, and save terminal energy consumption.

The SDT supports SDT based on a random access channel and SDT based on semi-static configuration. The SDT based on the random access channel can be divided into two manners, namely SDT based on a 2-step random access channel (2-step RACH) and SDT based on 4-step random access channel (4-step RACH).

### SUMMARY

In view of this, the present disclosure provides methods, apparatuses and a device for performing small data transmission (SDT), methods, apparatuses and a device for determining a transmission method of a random access message, and a storage medium.

According to a first aspect of the embodiments of the present disclosure, there is provided a method for performing small data transmission (SDT), performed by a user equipment (UE), the method including:
measuring a signal strength of a downlink signal;
based on whether the UE has a coverage enhancement (CE) capability, obtaining one or more signal strength thresholds related to the SDT and corresponding to the UE; and
performing the SDT based on the signal strength and the one or more signal strength thresholds.

In an implementation, based on whether the UE has the CE capability, obtaining the one or more signal strength thresholds related to the SDT and corresponding to the UE, includes:
in response to the UE having the CE capability, obtaining a first threshold as the one or more signal strength thresholds of the UE.

In an implementation, based on whether the UE has the CE capability, obtaining the one or more signal strength thresholds related to the SDT and corresponding to the UE, includes:
in response to the UE not having the CE capability, obtaining a second threshold as the one or more signal strength thresholds of the UE.

In an implementation, performing the SDT based on the signal strength and the one or more signal strength thresholds includes:
in response to the signal strength being greater than or equal to the first threshold, performing the SDT based on a 4-step random access channel (4-step RACH).

In an implementation, performing the SDT based on the signal strength and the one or more signal strength thresholds includes:
in response to the signal strength being greater than or equal to the second threshold, performing the SDT based on a 4-step random access channel (4-step RACH).

In an implementation, the first threshold is smaller than the second threshold.

In an implementation, based on whether the UE has the CE capability, obtaining the one or more signal strength thresholds related to the SDT and corresponding to the UE, includes:
in response to the UE having the CE capability, obtaining a first threshold and a third threshold as the one or more signal strength thresholds of the UE;
where performing the SDT based on the signal strength and the one or more signal strength thresholds includes:
in response to the signal strength being greater than or equal to the first threshold and smaller than the third threshold, enabling the CE capability of the UE and performing the SDT.

In an implementation, based on whether the UE has the CE capability, obtaining the one or more signal strength thresholds related to the SDT and corresponding to the UE, includes:
in response to the UE having the CE capability, obtaining a third threshold and a fourth threshold as the one or more signal strength thresholds of the UE;
where performing the SDT based on the signal strength and the one or more signal strength thresholds includes:
in response to the signal strength being greater than or equal to the third threshold and smaller than the fourth threshold, disabling the CE capability of the UE and performing the SDT.

In an implementation, the third threshold is greater than or equal to the second threshold.

In an implementation, based on whether the UE has the CE capability, obtaining the one or more signal strength thresholds related to the SDT and corresponding to the UE, includes:
in response to the UE having the CE capability, obtaining a fourth threshold as the one or more signal strength thresholds of the UE.

In an implementation, performing the SDT based on the signal strength and the one or more signal strength thresholds includes:
in response to the signal strength being greater than the fourth threshold, performing the SDT based on a 2-step random access channel (2-step RACH).

In an implementation, based on whether the UE has the CE capability, obtaining the one or more signal strength thresholds related to the SDT and corresponding to the UE, includes:
in response to the UE not having the CE capability, obtaining a second threshold and a fifth threshold as the one or more signal strength thresholds of the UE;
where performing the SDT based on the signal strength and the one or more signal strength thresholds includes:
   in response to the signal strength being greater than or equal to the second threshold and smaller than the fifth threshold, performing the SDT.

In an implementation, based on whether the UE has the CE capability, obtaining the one or more signal strength thresholds related to the SDT and corresponding to the UE, includes:
in response to the UE not having the CE capability, obtaining a fifth threshold as the one or more signal strength thresholds of the UE;
where performing the SDT based on the signal strength and the one or more signal strength thresholds includes:
in response to the signal strength being greater than or equal to the fifth threshold, performing the SDT based on a 2-step random access channel (2-step RACH).

In an implementation, obtaining the one or more signal strength thresholds related to the SDT and corresponding to the UE includes:
receiving signaling from a network device, where the signaling carries the one or more signal strength thresholds corresponding to the UE.

In an implementation, the signaling includes at least one of: minimum remaining system information (RMSI), main information block (MIB), radio resource control (RRC), other system information (OSI), downlink control information (DCI), or media access control-control element (MAC-CE).

According to a second aspect of the embodiments of the present disclosure, there is provided a method for determining a transmission method of a random access message, performed by a user equipment (UE), the method including:
measuring a signal strength of a downlink signal;
based on whether the UE has a coverage enhancement (CE) capability, obtaining one or more signal strength thresholds related to the transmission method of the random access message and corresponding to the UE; and
based on the signal strength and the one or more signal strength thresholds, determining the transmission method of the random access message to be a first transmission method or a second transmission method.

In an implementation, based on whether the UE has the CE capability, obtaining the one or more signal strength thresholds related to the transmission method of the random access message and corresponding to the UE, includes:
in response to the UE having the CE capability, obtaining a sixth threshold as the one or more signal strength thresholds of the UE;
where, based on the signal strength and the one or more signal strength thresholds, determining the transmission method of the random access message to be the first transmission method or the second transmission method, includes:
in response to the signal strength being greater than or equal to the sixth threshold, determining the transmission method of the random access message to be the first transmission method;
in response to the signal strength being smaller than the sixth threshold, determining the transmission method of the random access message to be the second transmission method.

In an implementation, based on whether the UE has the CE capability, obtaining the one or more signal strength thresholds related to the transmission method of the random access message and corresponding to the UE, includes:
in response to the UE not having the CE capability, obtaining a seventh threshold as the one or more signal strength thresholds of the UE;
where, based on the signal strength and the one or more signal strength thresholds, determining the transmission method of the random access message to be the first transmission method or the second transmission method, includes:
in response to the signal strength being greater than or equal to the seventh threshold, determining the transmission method of the random access message to be the first transmission method;
in response to the signal strength being smaller than the seventh threshold, determining the transmission method of the random access message to be the second transmission method.

In an implementation, the sixth threshold is smaller than the seventh threshold.

In an implementation, based on whether the UE has the CE capability, obtaining the one or more signal strength thresholds related to the transmission method of the random access message and corresponding to the UE, includes:
in response to the UE having the CE capability, obtaining a sixth threshold and an eighth threshold as the one or more signal strength thresholds of the UE;
where, based on the signal strength and the one or more signal strength thresholds, determining the transmission method of the random access message to be the first transmission method or the second transmission method, includes:
in response to the signal strength being greater than or equal to the sixth threshold and smaller than the eighth threshold, enabling the CE capability of the UE, and determining the transmission method of the random access message to be the first transmission method.

In an implementation, based on whether the UE has the CE capability, obtaining the one or more signal strength thresholds related to the transmission method of the random access message and corresponding to the UE, includes:
in response to the UE having the CE capability, obtaining an eighth threshold as the one or more signal strength thresholds of the UE;
where, based on the signal strength and the one or more signal strength thresholds, determining the transmission method of the random access message to be the first transmission method or the second transmission method, includes:
in response to the signal strength being greater than or equal to the eighth threshold, disabling the CE capability of the UE, and determining the transmission method of the random access message to be the first transmission method.

In an implementation, obtaining the one or more signal strength thresholds related to the transmission method of the random access message and corresponding to the UE includes:
receiving signaling from a network device, where the signaling carries the one or more signal strength thresholds corresponding to the UE.

In an implementation, the signaling includes at least one of: minimum remaining system information (RMSI), main information block (MIB), radio resource control (RRC), other system information (OSI), downlink control information (DCI), or media access control-control element (MAC-CE).

According to a third aspect of the embodiments of the present disclosure, there is provided a method for performing small data transmission (SDT), performed by a network device, the method including:
sending signaling, where the signaling carries one or more signal strength thresholds for a user equipment (UE) to determine whether to perform the SDT.

In an implementation, the one or more signal strength thresholds include at least one of: a first threshold, a second threshold, a third threshold, a fourth threshold, or a fifth threshold.

According to a fourth aspect of the embodiments of the present disclosure, there is provided a method for determining a transmission method of a random access message, performed by a network device, the method including:
sending signaling, where the signaling carries one or more signal strength thresholds for a user equipment (UE) to determine the transmission method of the random access message.

In an implementation, the one or more signal strength thresholds include at least one of: a sixth threshold, a seventh threshold, or an eighth threshold.

According to a fifth aspect of the embodiments of the present disclosure, there is provided an apparatus for performing small data transmission (SDT), applied to a user equipment (UE), the apparatus including:
a communicating module, configured to receive a downlink signal; and
a processing module, configured to, measure a signal strength of the downlink signal; based on whether the UE has a coverage enhancement (CE) capability, obtain one or more signal strength thresholds related to the SDT and corresponding to the UE; and perform the SDT based on the signal strength and the one or more signal strength thresholds.

According to a sixth aspect of the embodiments of the present disclosure, there is provided an apparatus for determining a transmission method of a random access message, applied to a user equipment (UE), the apparatus including:
a communicating module, configured to receive a downlink signal; and
a processing module, configured to, measure a signal strength of the downlink signal; based on whether the UE has a coverage enhancement (CE) capability, obtain one or more signal strength thresholds related to the transmission method of the random access message and corresponding to the UE; and based on the signal strength and the one or more signal strength thresholds, determine the transmission method of the random access message to be a first transmission method or a second transmission method.

According to a seventh aspect of the embodiments of the present disclosure, there is provided an apparatus for performing small data transmission (SDT), applied to a network device, the apparatus including:
a communicating module, configured to send signaling, where the signaling carries one or more signal strength thresholds for a user equipment (UE) to determine the transmission method of the random access message.

According to an eighth aspect of the embodiments of the present disclosure, there is provided an apparatus for determining a transmission method of a random access message, applied to a network device, the apparatus including:
a communicating module, configured to send signaling, where the signaling carries one or more signal strength thresholds for a user equipment (UE) to determine the transmission method of the random access message.

According to a ninth aspect of the embodiments of the present disclosure, there is provided a user equipment (UE), including:
one or more processors; and
a memory configured to store executable instructions by the one or more processors;
where the one or more processors are configured to execute the executable instructions in the memory to implement the steps of any one of the above methods.

According to a tenth aspect of the embodiments of the present disclosure, there is provided a network device, including:
one or more processors; and
a memory configured to store executable instructions by the one or more processors;
where the one or more processors are configured to execute the executable instructions in the memory to implement the steps of any one of the above methods.

According to a eleventh aspect of the embodiments of the present disclosure, there is provided non-transitory computer readable storage medium storing executable instructions which, when executed by a processor, implement the steps of any one of the above methods.

The technical solution provided by the embodiments of the present disclosure can include the following beneficial effects: when determining to perform the SDT, in addition to considering the signal strength of the signal of received by the UE, the UE also refers to its CE capability, thus being suitable for the UE with the CE capability to perform the SDT.

The technical solution provided by the embodiments of the present disclosure can also include the following beneficial effects: when determining the transmission method of the random access message, in addition to considering the signal strength of the signal of received by the UE, the UE also refers to its CE capability, thus being suitable for the UE with the CE capability to determine the transmission method of the random access message.

It should be understood that the above general descriptions and subsequent detailed descriptions are merely illustrative and explanatory, and shall not constitute limitation to the present disclosure.

### BRIEF DESCRIPTION OF THE DRAWINGS

The accompanying drawings described herein are used to provide a further understanding of embodiments of the present disclosure and constitute a part of the present disclosure. The implementations of the embodiments of the present disclosure and their descriptions are used to explain the embodiments of the present disclosure and do not constitute improper limitations to the embodiments of the present disclosure. In the accompanying drawings:

The accompanying drawings herein, which are incorporated in and constitute a part of the specification, illustrate examples consistent with the embodiments of the present disclosure, and together with the specification, serve to explain the principles of the embodiments of the present disclosure.
FIG. 1 is a flowchart of a method for performing small data transmission (SDT) according to an exemplary embodiment.
FIG. 2 is a flowchart of another method for performing SDT according to an exemplary embodiment.
FIG. 3 is a flowchart of yet another method for performing SDT according to an exemplary embodiment.
FIG. 4 is a flowchart of yet another method for performing SDT according to an exemplary embodiment.
FIG. 5 is a flowchart of yet another method for performing SDT according to an exemplary embodiment.
FIG. 6 is a flowchart of yet another method for performing SDT according to an exemplary embodiment.
FIG. 7 is a flowchart of yet another method for performing SDT according to an exemplary embodiment.
FIG. 8 is a flowchart of yet another method for performing SDT according to an exemplary embodiment.
FIG. 9 is a flowchart of yet another method for performing SDT according to an exemplary embodiment.
FIG. 10 is a flowchart of yet another method for performing SDT according to an exemplary embodiment.
FIG. 11 is a flowchart of yet another method for performing SDT according to an exemplary embodiment.
FIG. 12 is a flowchart of yet another method for performing SDT according to an exemplary embodiment.
FIG. 13 is a flowchart of a method for determining a transmission method of a random access message according to an exemplary embodiment.
FIG. 14 is a flowchart of another method for determining a transmission method of a random access message according to an exemplary embodiment.
FIG. 15 is a flowchart of yet another method for determining a transmission method of a random access message according to an exemplary embodiment.
FIG. 16 is a flowchart of yet another method for determining a transmission method of a random access message according to an exemplary embodiment.
FIG. 17 is a flowchart of yet another method for determining a transmission method of a random access message according to an exemplary embodiment.
FIG. 18 is a flowchart of yet another method for determining a transmission method of a random access message according to an exemplary embodiment.
FIG. 19 a flowchart of a method for performing SDT according to an exemplary embodiment.
FIG. 20 is a flowchart of a method for determining a transmission method of a random access message according to an exemplary embodiment.
FIG. 21 is a block diagram of an apparatus for performing SDT according to an exemplary embodiment.
FIG. 22 is a block diagram of an apparatus for determining a transmission method of a random access message according to an exemplary embodiment.
FIG. 23 is a block diagram of an apparatus for performing SDT according to an exemplary embodiment.
FIG. 24 is a block diagram of an apparatus for determining a transmission method of a random access message according to an exemplary embodiment.
FIG. 25 is a structural diagram of an apparatus for performing SDT according to an exemplary embodiment.
FIG. 26 is a structural diagram of an apparatus for performing SDT according to an exemplary embodiment.

### DETAILED DESCRIPTION OF THE EMBODIMENTS

Embodiments of the present disclosure are now further described with reference to the accompanying drawings and implementations.

Exemplary embodiments will be described in detail herein, examples of which are illustrated in the accompanying drawings. When the following descriptions involve the drawings, like numerals in different drawings refer to like or similar elements unless otherwise indicated. Implementations described in the following exemplary embodiments do not represent all implementations consistent with the embodiments of the present disclosure. Rather, they are merely examples of apparatuses and methods consistent with some aspects of the present disclosure as detailed in the appended claims.

It is to be noted that an embodiment in the present disclosure can include a plurality steps. These steps are numbered for convenience of description. However, these numbers are not a limitation on time slots and order of execution between steps. These steps can be implemented in any order, which is not limited by the embodiments of the present disclosure.

When determining whether to enable small data transmission (SDT) based on a random access channel (RACH), it is necessary to determine based on a signal strength of a signal received by a user equipment (UE), such as synchronization signal-reference signal receiving power (SS-RSRP). That is, it is guaranteed that the SDT can only be carried out under good coverage conditions, so as to avoid wasting uplink transmission resources.

In addition, for the SDT based on the RACH, whether to select SDT based on 2-step RACH or SDT based on 4-step RACH also needs to be determined based on the signal strength of the signal received by the UE.

In release-17, due to the introduction of the function of coverage enhancement (CE), it is hoped that even a UE with poor signal coverage at an edge of a cell can use the SDT to reduce power consumption and resource overhead, while reducing data transmission latency.

Therefore, in order to enable a UE with a CE capability to perform the SDT at the edge of the cell, the methods of the present disclosure are proposed.

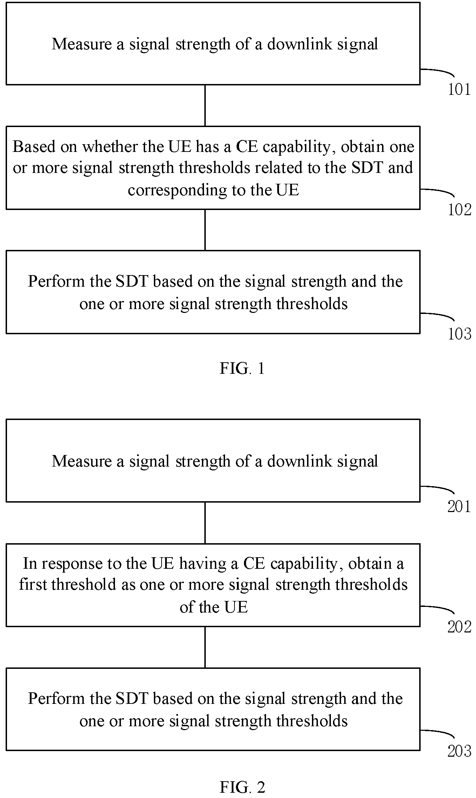

An embodiment of the present disclosure provides a method for performing the SDT, which is performed by a UE. This method can be performed independently or in combination with any other embodiment of the present disclosure. FIG. 1 is a flowchart of a method for performing the SDT according to an exemplary embodiment. As shown in FIG. 1, the method includes steps 101 to 103.

In step 101, a signal strength of a downlink signal is measured.

In step 102, based on whether the UE has a CE capability, one or more signal strength thresholds related to the SDT and corresponding to the UE are obtained.

In step 103, the SDT is performed based on the signal strength and the one or more signal strength thresholds.

In an implementation, the signal strength of the downlink signal measured by the UE can be synchronization signal-reference signal receiving power (SS-RSRP).

In an implementation, the UE obtains one or more corresponding thresholds based on whether it has the CE capability. In an implementation, the UE obtains the thresholds from signaling received by a base station. In an implementation, the UE obtains the thresholds based on protocol specifications. The thresholds herein are used by the UE to determine whether to perform the SDT and a specific manner used when performing the SDT, such as the SDT based on 2-step RACH or the SDT based on 4-step RACH.

In an implementation, the UE performs the SDT based on whether it has the CE capability and a relationship between the signal strength and the thresholds.

In this implementation, when determining to perform the SDT, in addition to considering the signal strength of the signal of received by the UE, the UE also refers to its CE capability, thus being suitable for the UE with the CE capability to perform the SDT.

An embodiment of the present disclosure provides a method for performing the SDT, which is performed by a UE. This method can be performed independently or in combination with any other embodiment of the present disclosure. FIG. 2 is a flowchart of a method for performing the SDT according to an exemplary embodiment. As shown in FIG. 2, the method includes steps 201 to 203.

In step 201, a signal strength of a downlink signal is measured.

In step 202, in response to the UE having a CE capability, a first threshold is obtained as one or more signal strength thresholds of the UE.

In step 203, the SDT is performed based on the signal strength and the one or more signal strength thresholds.

In an implementation, the signal strength of the downlink signal measured by the UE is SS-RSRP. In an implementation, the UE obtains the thresholds based on signaling received from a base station. In an implementation, the UE obtains the thresholds based on protocol specifications.

In an implementation, when the UE has the CE capability, the first threshold is obtained, and based on the relationship between the signal strength and the first threshold, it is determined whether to perform the SDT.

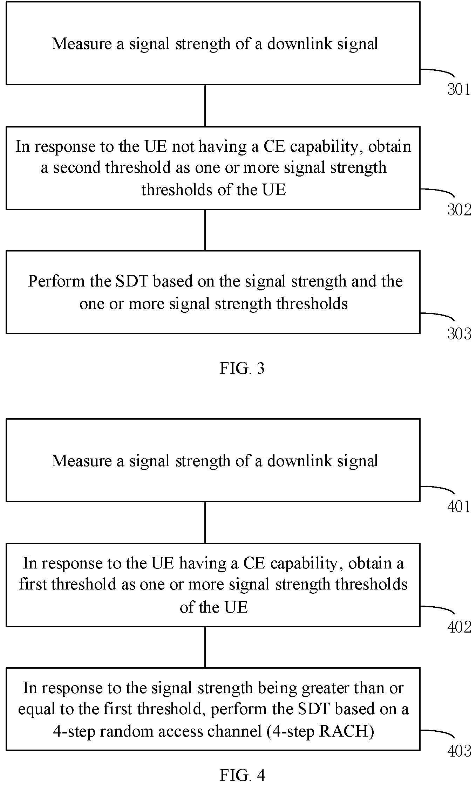

An embodiment of the present disclosure provides a method for performing the SDT, which is performed by a UE. This method can be performed independently or in combination with any other embodiment of the present disclosure. FIG. 3 is a flowchart of a method for performing the SDT according to an exemplary embodiment. As shown in FIG. 3, the method includes steps 301 to 303.

In step 301, a signal strength of a downlink signal is measured.

In step 302, in response to the UE not having a CE capability, a second threshold is obtained as one or more signal strength thresholds of the UE.

In step 303, the SDT is performed based on the signal strength and the one or more signal strength thresholds.

In an implementation, the signal strength of the downlink signal measured by the UE is SS-RSRP. In an implementation, the UE obtains the thresholds based on signaling received from a base station. In an implementation, the UE obtains the thresholds based on protocol specifications.

In an implementation, when the UE does not have the CE capability, the second threshold is obtained, and based on the relationship between the signal strength and the second threshold, it is determined whether to perform the SDT.

An embodiment of the present disclosure provides a method for performing the SDT, which is performed by a UE. This method can be performed independently or in combination with any other embodiment of the present disclosure. FIG. 4 is a flowchart of a method for performing the SDT according to an exemplary embodiment. As shown in FIG. 4, the method includes steps 401 to 403.

In step 401, a signal strength of a downlink signal is measured.

In step 402, in response to the UE having a CE capability, a first threshold is obtained as one or more signal strength thresholds of the UE.

In step 403, in response to the signal strength being greater than or equal to the first threshold, the SDT based on a 4-step random access channel (4-step RACH) is performed.

In an implementation, the signal strength of the downlink signal measured by the UE is SS-RSRP. In an implementation, the UE obtains the thresholds based on signaling received from a base station. In an implementation, the UE obtains the thresholds based on protocol specifications.

In an implementation, when the UE has the CE capability, the first threshold is obtained, and when the signal strength is greater than or equal to the first threshold, the SDT based on the 4-step RACH is performed. In an implementation, when the signal strength is smaller than the first threshold, which indicates the signal strength is poor, and the SDT is not performed.

In an implementation, the first threshold is smaller than the second threshold mentioned above. This is because for the UE with the CE capability, even if it is located at the edge of a cell, that is, in an environment with poor signal coverage, the SDT can be performed.

In this implementation, for the UE with the CE capability, the signal strength of the signal received by the UE is compared with a lower threshold to determine whether to perform the SDT, the CE capability of the UE can be fully utilized, so that the UE can perform the SDT even in places with poor signal coverage by a base station, thereby reducing power consumption and resource overhead, and reducing data transmission latency.

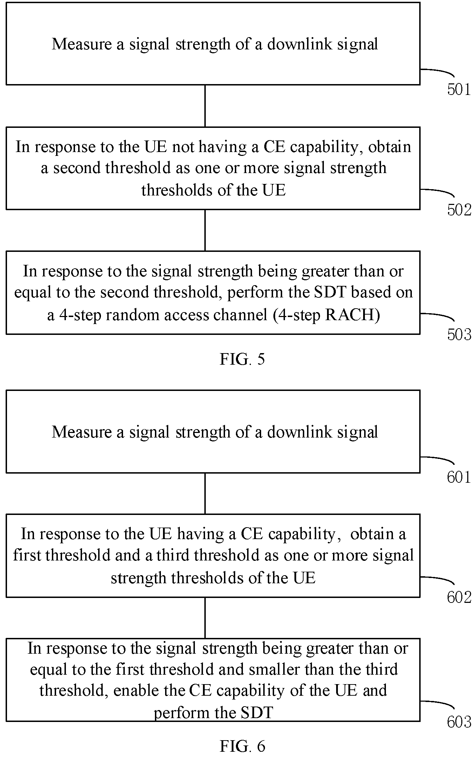

An embodiment of the present disclosure provides a method for performing the SDT, which is performed by a UE. This method can be performed independently or in combination with any other embodiment of the present disclosure. FIG. 5 is a flowchart of a method for performing the SDT according to an exemplary embodiment. As shown in FIG. 5, the method includes steps 501 to 503.

In step 501, a signal strength of a downlink signal is measured.

In step 502, in response to the UE not having a CE capability, a second threshold is obtained as one or more signal strength thresholds of the UE.

In step 503, in response to the signal strength being greater than or equal to the second threshold, the SDT based on a 4-step random access channel (4-step RACH) is performed.

In an implementation, the signal strength of the downlink signal measured by the UE is SS-RSRP. In an implementation, the UE obtains the thresholds based on signaling received from a base station. In an implementation, the UE obtains the thresholds based on protocol specifications.

In an implementation, when the UE does not have the CE capability, the second threshold is obtained, and when the signal strength is greater than or equal to the second threshold, the SDT based on the 4-step RACH is performed. In an implementation, when the signal strength is smaller than the second threshold, which indicates the signal strength is poor, and the SDT is not performed.

In an implementation, the second threshold is greater than the first threshold mentioned above. This is because for the UE that does not have the CE capability, when it is located in an environment with poor signal coverage, since it has no CE capability to compensate the poor signal strength of the downlink signal, it is necessary to set the threshold for determining whether to perform the SDT higher than the first threshold, thus ensuring the communication quality.

An embodiment of the present disclosure provides a method for performing the SDT, which is performed by a UE. This method can be performed independently or in combination with any other embodiment of the present disclosure. A first threshold is smaller than a second threshold.

The first threshold is used to determine whether the UE with the CE capability performs the SDT. The second threshold is used to determine whether the UE without the CE capability performs the SDT. The reason why the first threshold is smaller than the second threshold is that for the UE with the CE capability, even if it is located in an environment with poor signal coverage, the SDT can be performed, thereby reducing power consumption and resource overhead, and reducing data transmission latency.

An embodiment of the present disclosure provides a method for performing the SDT, which is performed by a UE. This method can be performed independently or in combination with any other embodiment of the present disclosure. FIG. 6 is a flowchart of a method for performing the SDT according to an exemplary embodiment. As shown in FIG. 6, the method includes steps 601 to 603.

In step 601, a signal strength of a downlink signal is measured.

In step 602, in response to the UE having a CE capability, a first threshold and a third threshold are obtained as one or more signal strength thresholds of the UE.

In step 603, in response to the signal strength being greater than or equal to the first threshold and smaller than the third threshold, the CE capability of the UE is enabled and the SDT is performed.

In an implementation, the signal strength of the downlink signal measured by the UE is SS-RSRP. In an implementation, the UE obtains the thresholds related to the SDT based on signaling received from a base station. In an implementation, the UE obtains the thresholds related to the SDT based on protocol specifications.

In an implementation, when the UE has the CE capability, if the signal strength is greater than or equal to the first threshold and smaller than the third threshold, the SDT based on the 4-step RACH is performed. The first threshold is smaller than the third threshold. Here, Herein, the signal strength is smaller than the third threshold, which indicates that the signal strength of the signal received by the UE is not large enough. In order to ensure communication quality, the UE needs to enable the CE capability, such as starting a repetition function.

In an implementation, the third threshold is equal to the second threshold based on which to determine whether the UE without the CE capability can perform the SDT. In an implementation, the third threshold is greater than the second threshold.

In this implementation, for the UE with the CE capability, when the signal strength of the signal received by the UE indicates that the UE can perform the SDT, but the signal strength is not large enough, the UE enables the CE capability to compensate for the insufficient signal coverage by the base station through enabling the CE capability, thereby reducing power consumption and resource overhead while reducing data transmission latency by performing the SDT.

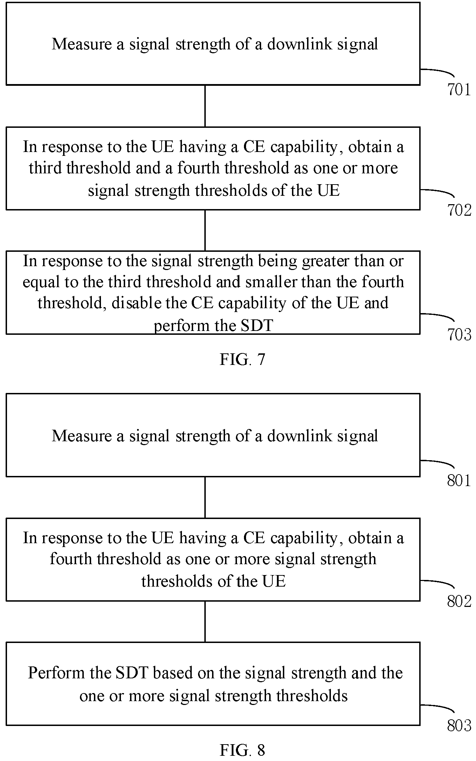

An embodiment of the present disclosure provides a method for performing the SDT, which is performed by a UE. This method can be performed independently or in combination with any other embodiment of the present disclosure. FIG. 7 is a flowchart of a method for performing the SDT according to an exemplary embodiment. As shown in FIG. 7, the method includes steps 701 to 703.

In step 701, a signal strength of a downlink signal is measured.

In step 702, in response to the UE having a CE capability, a third threshold and a fourth threshold are obtained as one or more signal strength thresholds of the UE.

In step 703, in response to the signal strength being greater than or equal to the third threshold and smaller than the fourth threshold, the CE capability of the UE is disabled and the SDT is performed.

In an implementation, the signal strength of the downlink signal measured by the UE is SS-RSRP. In an implementation, the UE obtains the thresholds related to the SDT based on signaling received from a base station. In an implementation, the UE obtains the thresholds related to the SDT based on protocol specifications.

In an implementation, when the UE has CE capability, if the signal strength is greater than or equal to the third threshold and smaller than the fourth threshold, the SDT based on the 4-step RACH is performed. The third threshold is smaller than the fourth threshold. Herein, the signal strength is greater than the third threshold, which indicates that the signal strength of the signal received by the UE is large enough, and a certain communication quality can be guaranteed without the UE performing the CE.

In this implementation, for the UE with the CE capability, when the signal strength of the signal received by the UE indicates that the UE can perform the SDT, and the signal strength is large enough, the UE performs the SDT without enabling CE capability, thereby reducing power consumption and resource overhead while reducing data transmission latency.

An embodiment of the present disclosure provides a method for performing the SDT, which is performed by a UE. This method can be performed independently or in combination with any other embodiment of the present disclosure. The third threshold is greater than or equal to the second threshold.

An embodiment of the present disclosure provides a method for performing the SDT, which is performed by a UE. This method can be performed independently or in combination with any other embodiment of the present disclosure. FIG. 8 is a flowchart of a method for performing the SDT according to an exemplary embodiment. As shown in FIG. 8, the method includes steps 801 to 803.

In step 801, a signal strength of a downlink signal is measured.

In step 802, in response to the UE having a CE capability, a fourth threshold is obtained as one or more signal strength thresholds of the UE.

In step 803, the SDT is performed based on the signal strength and the one or more signal strength thresholds.

In an implementation, the signal strength of the downlink signal measured by the UE is SS-RSRP. In an implementation, the UE obtains the thresholds based on signaling received from a base station. In an implementation, the UE obtains the thresholds based on protocol specifications.

In an implementation, when the UE has the CE capability, the fourth threshold is obtained, and based on the relationship between the signal strength and the fourth threshold, it is determined whether to perform the SDT.

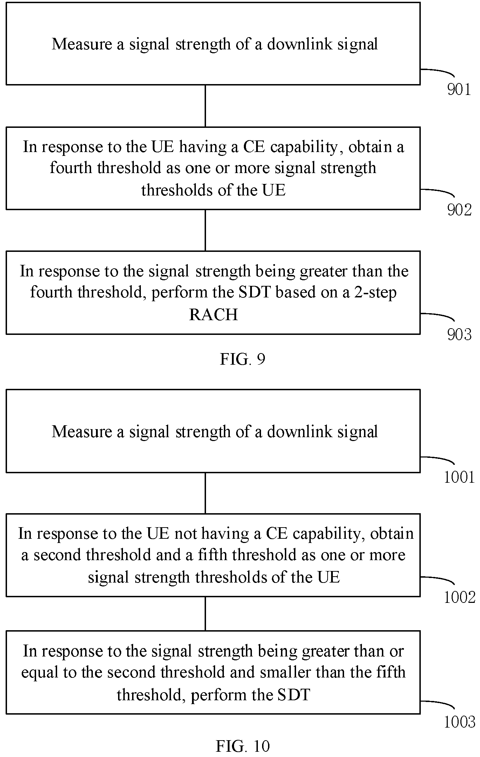

An embodiment of the present disclosure provides a method for performing the SDT, which is performed by a UE. This method can be performed independently or in combination with any other embodiment of the present disclosure. FIG. 9 is a flowchart of a method for performing the SDT according to an exemplary embodiment. As shown in FIG. 9, the method includes steps 901 to 903.

In step 901, a signal strength of a downlink signal is measured.

In step 902, in response to the UE having a CE capability, a fourth threshold is obtained as one or more signal strength thresholds of the UE.

In step 903, in response to the signal strength being greater than the fourth threshold, the SDT based on a 2-step RACH is performed.

In an implementation, the signal strength of the downlink signal measured by the UE is SS-RSRP. In an implementation, the UE obtains the thresholds related to the SDT based on signaling received from a base station. In an implementation, the UE obtains the thresholds related to the SDT based on protocol specifications.

In an implementation, when the UE has the CE capability, if the signal strength is greater than or equal to the fourth threshold, it indicates that the signal strength is large enough. In this case, the UE performs the SDT based on the 2-step RACH. The fourth threshold is greater than the first threshold and the third threshold mentioned above.

In this implementation, for the UE with the CE capability, when the signal strength of the signal received by the UE indicates that the UE can perform the SDT, and the signal strength is large enough, the UE performs the SDT based on the 2-step RACH, thereby reducing power consumption and resource overhead while reducing data transmission latency.

An embodiment of the present disclosure provides a method for performing the SDT, which is performed by a UE. This method can be performed independently or in combination with any other embodiment of the present disclosure. FIG. 10 is a flowchart of a method for performing the SDT according to an exemplary embodiment. As shown in FIG. 10, the method includes steps 1001 to 1003.

In step 1001, a signal strength of a downlink signal is measured.

In step 1002, in response to the UE not having a CE capability, a second threshold and a fifth threshold are obtained as one or more signal strength thresholds of the UE.

In step 1003, in response to the signal strength being greater than or equal to the second threshold and smaller than the fifth threshold, the SDT is performed.

In an implementation, the signal strength of the downlink signal measured by the UE is SS-RSRP. In an implementation, the UE obtains the thresholds related to the SDT based on signaling received from a base station. In an implementation, the UE obtains the thresholds related to the SDT based on protocol specifications.

In an implementation, when the UE does not have the CE capability, if the signal strength is greater than or equal to the second threshold and smaller than the fifth threshold, the SDT based on a 4-step RACH is performed. The second threshold herein is smaller than the fifth threshold, and the second threshold is greater than the first threshold mentioned above. The first threshold is used to determine whether the UE with the CE capability can perform the SDT. Herein, the signal strength is smaller than the fifth threshold, which indicates that the signal strength of the signal received by the UE is not large enough. In order to ensure communication quality, the SDT based on a 4-step RACH is performed.

In this implementation, for the UE without the CE capability, when the signal strength of the signal received by the UE indicates that the UE can perform the SDT, and the signal strength is not large enough, the UE performs the SDT based on the 4-step RACH, thereby reducing power consumption and resource overhead while reducing data transmission latency.

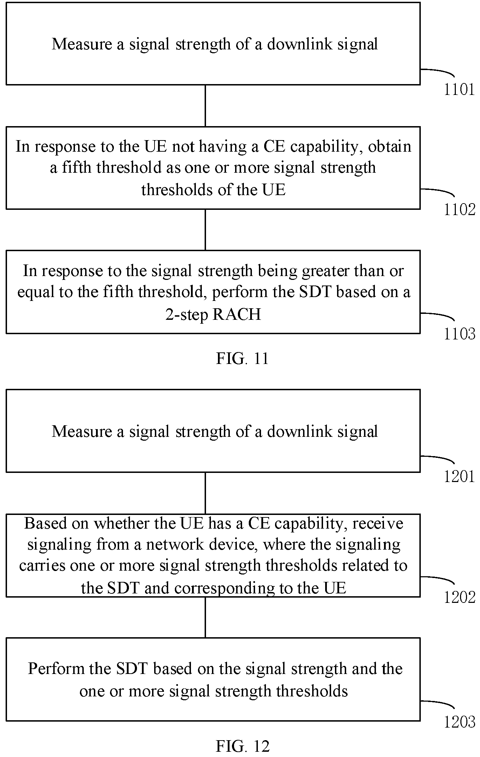

An embodiment of the present disclosure provides a method for performing the SDT, which is performed by a UE. This method can be performed independently or in combination with any other embodiment of the present disclosure. FIG. 11 is a flowchart of a method for performing the SDT according to an exemplary embodiment. As shown in FIG. 11, the method includes steps 1101 to 1103.

In step 1101, a signal strength of a downlink signal is measured.

In step 1102, in response to the UE not having a CE capability, a fifth threshold is obtained as one or more signal strength thresholds of the UE.

In step 1103, in response to the signal strength being greater than or equal to the fifth threshold, the SDT based on a 2-step RACH is performed.

In an implementation, the signal strength of the downlink signal measured by the UE is SS-RSRP. In an implementation, the UE obtains the thresholds related to the SDT based on signaling received from a base station. In an implementation, the UE obtains the thresholds related to the SDT based on protocol specifications.

In an implementation, when the UE does not have the CE capability, if the signal strength is greater than or equal to the fifth threshold, it indicates that the signal strength is large enough. In this case, the UE performs the SDT based on the 2-step RACH. The fifth threshold is greater than the second threshold mentioned above.

In this implementation, for the UE without the CE capability, when the signal strength of the signal received by the UE indicates that the UE can perform the SDT, and the signal strength is large enough, the UE performs the SDT based on the 2-step RACH, thereby reducing power consumption and resource overhead while reducing data transmission latency.

An embodiment of the present disclosure provides a method for performing the SDT, which is performed by a UE. This method can be performed independently or in combination with any other embodiment of the present disclosure. FIG. 12 is a flowchart of a method for performing the SDT according to an exemplary embodiment. As shown in FIG. 12, the method includes steps 1201 to 1203.

In step 1201, a signal strength of a downlink signal is measured.

In step 1202, based on whether the UE has a CE capability, signaling from a network device is received, where the signaling carries one or more signal strength thresholds related to the SDT and corresponding to the UE.

In step 1203, the SDT is performed based on the signal strength and the one or more signal strength thresholds.

In an implementation, the signal strength of the downlink signal measured by the UE is SS-RSRP.

In an implementation, the UE obtains the thresholds based on signaling received from a base station. The thresholds include at least one of a first threshold, a second threshold, a third threshold, a fourth threshold, and a fifth threshold.

It is to be noted that the UE can also obtain the above thresholds based on protocol specifications.

In this implementation, the UE determines whether to perform the SDT based on the thresholds sent by the base station through the signaling, which can make a more accurate determination based on the current network environment, and achieve the purposes of reducing power consumption and resource overhead, and reducing data transmission delay, while ensuring communication quality.

An embodiment of the present disclosure provides a method for performing the SDT, which is performed by a UE. This method can be performed independently or in combination with any other embodiment of the present disclosure. The signaling includes at least one of: minimum remaining system information (RMSI), main information block (MIB), radio resource control (RRC), other system information (OSI), downlink control information (DCI), or media access control-control element (MAC-CE).

In an implementation, the signal strength of the downlink signal measured by the UE is SS-RSRP.

In an implementation, the UE obtains one or more thresholds based on the signaling received from a base station. The signaling includes at least one of: RMSI, MIB, RRC, OSI, DCI, or MAC-CE.

In an implementation, the UE obtains a first threshold, a second threshold, a third threshold, a fourth threshold, and a fifth threshold through the same signaling. In this case, different thresholds are obtained through different parameters in the signaling. In an implementation, the UE obtains the first threshold, the second threshold, the third threshold, the fourth threshold, and the fifth threshold through different signaling. For example, the first threshold is obtained through signaling RMSI, and the second threshold is obtained through signaling MIB, and so on.

In this implementation method, the UE determines whether to perform the SDT based on the thresholds sent by the base station through the signaling, which can make a more accurate determination based on the current network environment, and achieve the purposes of reducing power consumption and resource overhead, and reducing data transmission delay, while ensuring communication quality.

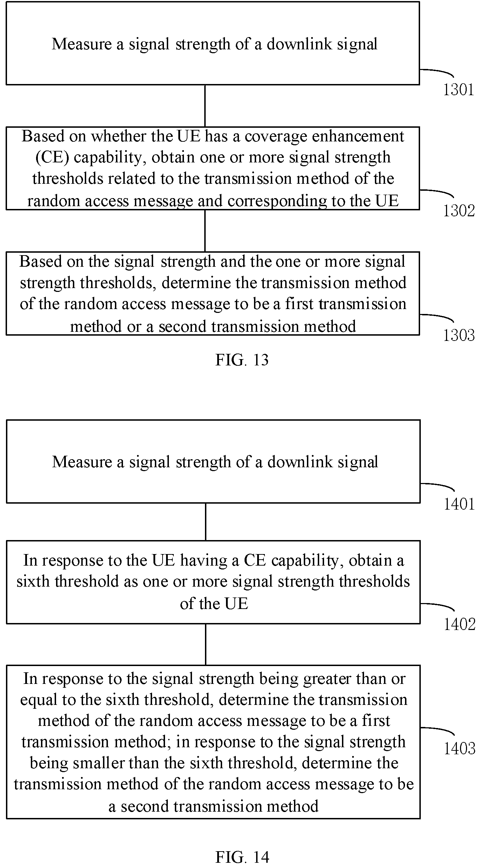

An embodiment of the present disclosure provides a method for determining a transmission method of a random access message, which is performed by a UE. This method can be performed independently or in combination with any other embodiment of the present disclosure. FIG. 13 is a flowchart of a method for determining the transmission method of the random access message according to an exemplary embodiment. As shown in FIG. 13, the method includes steps 1301 to 1303.

In step 1301, a signal strength of a downlink signal is measured.

In step 1302, based on whether the UE has a coverage enhancement (CE) capability, one or more signal strength thresholds related to the transmission method of the random access message and corresponding to the UE are obtained.

In step 1303, based on the signal strength and the one or more signal strength thresholds, the transmission method of the random access message is determined to be a first transmission method or a second transmission method.

In an implementation, the signal strength of the downlink signal measured by the UE is SS-RSRP. In an implementation, the UE obtains the thresholds related to the transmission method of the random access message based on signaling received from a base station. In an implementation, the UE obtains the thresholds related to the transmission method of the random access message based on protocol specifications.

In an implementation, the UE determines the transmission method of the random access message to be the first transmission method or the second transmission method based on whether it has the CE capability and a relationship between the signal strength and the thresholds. In an implementation, the random access message is a msg3 message in a random access channel. In an implementation, the first transmission method is a transmission method of the random access message based on a preamble resource in group B. In an implementation, the second transmission method is a transmission method of the random access message based on a preamble resource in group A.

In this implementation, when determining the transmission method of the random access message, in addition to considering the signal strength of the signal of received by the UE, the UE also refers to its CE capability, thus being suitable for the UE with the CE capability to determine the transmission method of the random access message.

An embodiment of the present disclosure provides a method for determining a transmission method of a random access message, which is performed by a UE. This method can be performed independently or in combination with any other embodiment of the present disclosure. FIG. 14 is a flowchart of a method for determining the transmission method of the random access message according to an exemplary embodiment. As shown in FIG. 14, the method includes steps 1401 to 1403.

In step 1401, a signal strength of a downlink signal is measured.

In step 1402, in response to the UE having a CE capability, a sixth threshold is obtained as one or more signal strength thresholds of the UE.

In step 1403, in response to the signal strength being greater than or equal to the sixth threshold, the transmission method of the random access message is determined to be a first transmission method; in response to the signal strength being smaller than the sixth threshold, the transmission method of the random access message is determined to be a second transmission method.

In an implementation, the signal strength of the downlink signal measured by the UE is SS-RSRP. In an implementation, the UE obtains the thresholds related to the transmission method of the random access message based on signaling received from a base station. In an implementation, the UE obtains the thresholds related to the transmission method of the random access message based on protocol specifications.

In an implementation, when the UE has the CE capability, the sixth threshold is obtained. When the signal strength is greater than or equal to the sixth threshold, the transmission method of the random access message is determined to be the first transmission method, for example, a transmission method of the random access message based on a preamble resource in group B. In an implementation, when the UE has the CE capability, if the signal strength is smaller than the sixth threshold, the transmission method of the random access message is determined to be the second transmission method, for example, a transmission method of the random access message based on a preamble resource in group A.

In an implementation, the sixth threshold is smaller than a seventh threshold. The seventh threshold is a threshold based on which to determine the transmission method of the random access message for the UE without the CE capability.

In this implementation, a relatively small threshold is adopted to determine the transmission method of the random access message for the UE with the CE capability, so that the UE can adopt the first transmission method even in an environment with poor signal coverage.

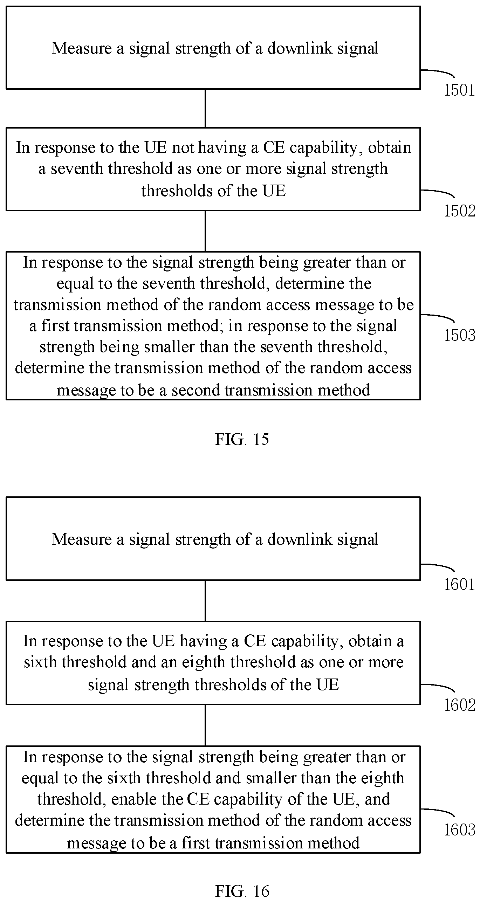

An embodiment of the present disclosure provides a method for determining a transmission method of a random access message, which is performed by a UE. This method can be performed independently or in combination with any other embodiment of the present disclosure. FIG. 15 is a flowchart of a method for determining the transmission method of the random access message according to an exemplary embodiment. As shown in FIG. 15, the method includes steps 1501 to 1503.

In step 1501, a signal strength of a downlink signal is measured.

In step 1502, in response to the UE not having a CE capability, a seventh threshold is obtained as one or more signal strength thresholds of the UE.

In step 1503, in response to the signal strength being greater than or equal to the seventh threshold, the transmission method of the random access message is determined to be a first transmission method; in response to the signal strength being smaller than the seventh threshold, the transmission method of the random access message is determined to be a second transmission method.

In an implementation, the signal strength of the downlink signal measured by the UE is SS-RSRP. In an implementation, the UE obtains the thresholds related to the transmission method of the random access message based on signaling received from a base station. In an implementation, the UE obtains the thresholds related to the transmission method of the random access message based on protocol specifications.

In an implementation, when the UE does not have the CE capability, the seventh threshold is obtained. When the signal strength is greater than or equal to the seventh threshold, the transmission method of the random access message is determined to be the first transmission method, for example, a transmission method of the random access message based on a preamble resource in group B. In an implementation, when the UE does not have the CE capability, if the signal strength is smaller than the seventh threshold, the transmission method of the random access message is determined to be the second transmission method, for example, a transmission method of the random access message based on a preamble resource in group A.

In an implementation, a sixth threshold is smaller than the seventh threshold. The sixth threshold is a threshold based on which to determine the transmission method of the random access message for the UE with the CE capability.

In this implementation, the UE without the CE capability can adopt the first transmission method for transmission of the random access message only when it is in an environment with good signal coverage.

An embodiment of the present disclosure provides a method for determining a transmission method of a random access message, which is performed by a UE. This method can be performed independently or in combination with any other embodiment of the present disclosure. A sixth threshold is smaller than a seventh threshold.

The sixth threshold is a threshold based on which to determine the transmission method of the random access message for the UE with the CE capability. The seventh threshold is a threshold based on which to determine the transmission method of the random access message for the UE without the CE capability.

In an implementation, the first transmission method is a transmission method of the random access message based on a preamble resource in group B, and the second transmission method is a transmission method of the random access message based on a preamble resource in group A.

In this implementation, a relatively small threshold is adopted to determine the transmission method of the random access message for the UE with the CE capability, so that the UE can adopt the first transmission method even in an environment with poor signal coverage.

An embodiment of the present disclosure provides a method for determining a transmission method of a random access message, which is performed by a UE. This method can be performed independently or in combination with any other embodiment of the present disclosure. FIG. 16 is a flowchart of a method for determining the transmission method of the random access message according to an exemplary embodiment. As shown in FIG. 16, the method includes steps 1601 to 1603.

In step 1601, a signal strength of a downlink signal is measured.

In step 1602, in response to the UE having a CE capability, a sixth threshold and an eighth threshold are obtained as one or more signal strength thresholds of the UE.

In step 1603, in response to the signal strength being greater than or equal to the sixth threshold and smaller than the eighth threshold, the CE capability of the UE is enabled, and the transmission method of the random access message is determined to be a first transmission method.

In an implementation, the signal strength of the downlink signal measured by the UE is SS-RSRP. In an implementation, the UE obtains the thresholds related to the transmission method of the random access message based on signaling received from a base station. In an implementation, the UE obtains the thresholds related to the transmission method of the random access message based on protocol specifications.

In an implementation, when the UE has the CE capability, if the signal strength is greater than or equal to the sixth threshold and smaller than the eighth threshold, the transmission method of the random access message is determined to be the first transmission method. The sixth threshold is smaller than the eighth threshold. Herein, the signal strength is smaller than the eighth threshold, which indicates that the signal strength of the signal received by the UE is not large enough. In order to ensure communication quality, the UE needs to enable the CE capability.

In an implementation, the eighth threshold is equal to a seventh threshold based on which to determine the transmission method of the random access message for the UE without the CE capability.

In this implementation, for the UE with the CE capability, when the signal strength of the signal received by the UE indicates that the UE can adopt the second transmission method for transmission of the random access message, but the signal strength is not large enough, the UE enables the CE capability to compensate for the insufficient signal coverage by the base station through enabling the CE capability.

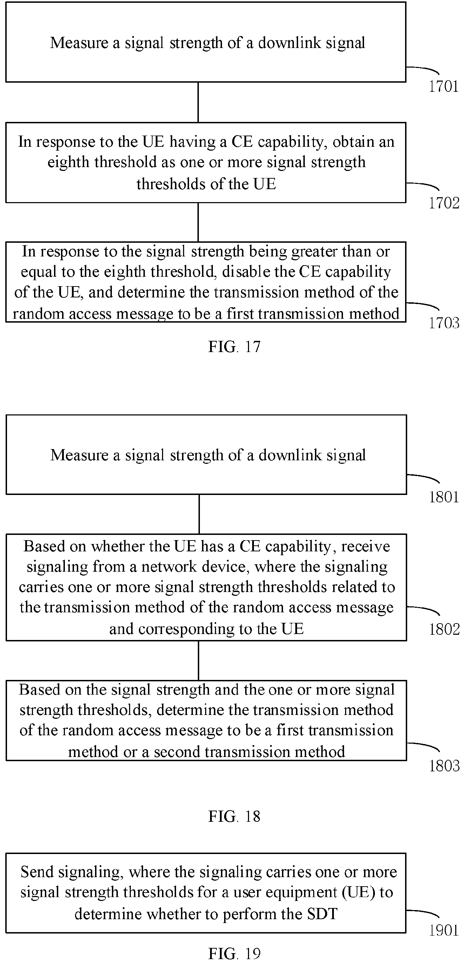

An embodiment of the present disclosure provides a method for determining a transmission method of a random access message, which is performed by a UE. This method can be performed independently or in combination with any other embodiment of the present disclosure. FIG. 17 is a flowchart of a method for determining the transmission method of the random access message according to an exemplary embodiment. As shown in FIG. 17, the method includes steps 1701 to 1703.

In step 1701, a signal strength of a downlink signal is measured.

In step 1702, in response to the UE having a CE capability, an eighth threshold is obtained as one or more signal strength thresholds of the UE.

In step 1703, in response to the signal strength being greater than or equal to the eighth threshold, the CE capability of the UE is disabled, and the transmission method of the random access message is determined to be a first transmission method.

In an implementation, the signal strength of the downlink signal measured by the UE is SS-RSRP. In an implementation, the UE obtains the thresholds related to the transmission method of the random access message based on signaling received from a base station. In an implementation, the UE obtains the thresholds related to the transmission method of the random access message based on protocol specifications.

In an implementation, when the UE has the CE capability, if the signal strength is greater than or equal to the eighth threshold, it indicates that the signal strength is large enough. In this case, the CE capability of the UE can be disabled, and the first transmission method can be adopted for transmission of the random access message. The eighth threshold is greater than the sixth threshold mentioned above.

In this implementation, for UE with the CE capability, when the signal strength of the signal received by the UE is large enough, the UE adopts the first transmission method for transmission of the random access message without enabling the CE capability.

An embodiment of the present disclosure provides a method for determining a transmission method of a random access message, which is performed by a UE. This method can be performed independently or in combination with any other embodiment of the present disclosure. FIG. 18 is a flowchart of a method for determining the transmission method of the random access message according to an exemplary embodiment. As shown in FIG. 18, the method includes steps 1801 to 1803.

In step 1801, a signal strength of a downlink signal is measured.

In step 1802, based on whether the UE has a CE capability, signaling from a network device is received, where the signaling carries one or more signal strength thresholds related to the transmission method of the random access message and corresponding to the UE.

In step 1803, based on the signal strength and the one or more signal strength thresholds, the transmission method of the random access message is determined to be a first transmission method or a second transmission method.

In an implementation, the signal strength of the downlink signal measured by the UE is SS-RSRP.

In an implementation, the UE obtains the thresholds based on signaling received from a base station. The thresholds include at least one of a sixth threshold, a seventh threshold, and an eighth threshold.

It is to be noted that the UE can also obtain the above thresholds based on protocol specifications.

In this implementation, the UE determines the transmission method of the random access message based on the thresholds sent by the base station through the signaling, which can make a more accurate determination based on the current network environment and ensure communication quality.

An embodiment of the present disclosure provides a method for determining a transmission method of a random access message, which is performed by a UE. This method can be performed independently or in combination with any other embodiment of the present disclosure. The signaling includes at least one of: RMSI, MIB, RRC, OSI, DCI, or MAC-CE.

In an implementation, the signal strength of the downlink signal measured by the UE is SS-RSRP.

In an implementation, the UE obtains one or more thresholds based on the signaling received from a base station. The signaling includes at least one of: RMSI, MIB, RRC, OSI, DCI, or MAC-CE.

In an implementation, the UE obtains a six threshold, a seven threshold and an eight threshold through the same signaling. In this case, different thresholds are obtained through different parameters in the signaling. In an implementation, the UE obtains the six threshold, the seven threshold and the eight threshold through different signaling. For example, the sixth threshold is obtained through signaling RMSI, and the seven threshold is obtained through signaling MIB, and so on.

In this implementation, the UE determines the transmission method of the random access message based on the thresholds sent by the base station through the signaling, which can make a more accurate determination based on the current network environment and ensure communication quality.

An embodiment of the present disclosure provides a method for performing small data transmission (SDT), which is performed by a network device. This method can be performed independently or in combination with any other embodiment of the present disclosure. FIG. 19 is a flowchart of a method for performing the SDT according to an exemplary embodiment. As shown in FIG. 19, the method includes step 1901.

In step 1901, signaling is sent, where the signaling carries one or more signal strength thresholds for a user equipment (UE) to determine whether to perform the SDT.

In an implementation, the signaling includes at least one of: RMSI, MIB, RRC, OSI, DCI, or MAC-CE.

In an implementation, the network device sends different signal strength thresholds through the same signaling. In this case, different thresholds are sent through different parameters in the signaling. In an implementation, the network device sends different signal strength thresholds through different signaling.

An embodiment of the present disclosure provides a method for performing SDT, which is performed by a network device. This method can be performed independently or in combination with any other embodiment of the present disclosure. The one or more signal strength thresholds include at least one of: a first threshold, a second threshold, a third threshold, a fourth threshold, or a fifth threshold.

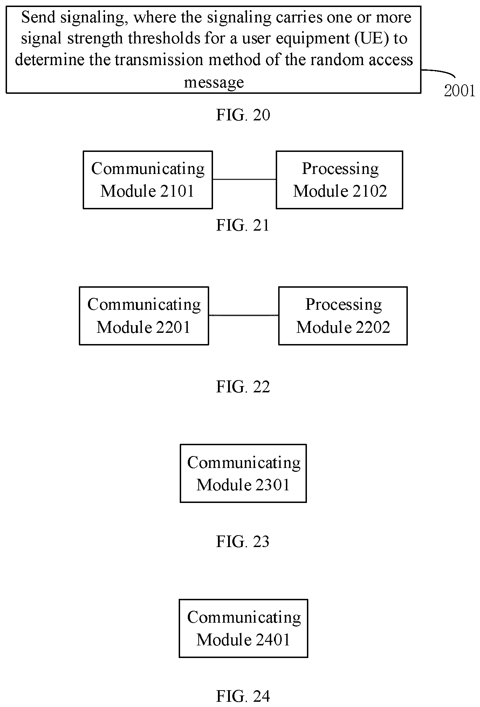

An embodiment of the present disclosure provides a method for determining a transmission method of a random access message, which is performed by a network device. This method can be performed independently or in combination with any other embodiment of the present disclosure. FIG. 20 is a flowchart of a method for determining the transmission method of the random access message according to an exemplary embodiment. As shown in FIG. 20, the method includes step 2001.

In step 2001, signaling is sent, where the signaling carries one or more signal strength thresholds for a user equipment (UE) to determine the transmission method of the random access message.

In an implementation, the signaling includes at least one of: RMSI, MIB, RRC, OSI, DCI, or MAC-CE.

In an implementation, the network device sends different signal strength thresholds through the same signaling. In this case, different thresholds are sent through different parameters in the signaling. In an implementation, the network device sends different signal strength thresholds through different signaling.

An embodiment of the present disclosure provides a method for determining a transmission method of a random access message, which is performed by a network device. This method can be performed independently or in combination with any other embodiment of the present disclosure. The one or more signal strength thresholds include at least one of: a sixth threshold, a seventh threshold, or an eighth threshold.

An embodiment of the present disclosure provides an apparatus for performing small data transmission (SDT), applied to a user equipment (UE). As shown in FIG. 21, the apparatus includes:
a communicating module 2101, configured to receive a downlink signal; and
a processing module 2102, configured to, measure a signal strength of the downlink signal; based on whether the UE has a coverage enhancement (CE) capability, obtain one or more signal strength thresholds related to the SDT and corresponding to the UE; and perform the SDT based on the signal strength and the one or more signal strength thresholds.

An embodiment of the present disclosure provides an apparatus for determining a transmission method of a random access message, applied to a user equipment (UE). As shown in FIG. 22, the apparatus includes:
a communicating module 2201, configured to receive a downlink signal; and
a processing module 2202, configured to, measure a signal strength of the downlink signal; based on whether the UE has a coverage enhancement (CE) capability, obtain one or more signal strength thresholds related to the transmission method of the random access message and corresponding to the UE; and based on the signal strength and the one or more signal strength thresholds, determine the transmission method of the random access message to be a first transmission method or a second transmission method.

An embodiment of the present disclosure provides an apparatus for performing small data transmission (SDT), applied to a network device. As shown in FIG. 23, the apparatus includes:
a communicating module 2301, configured to send signaling, where the signaling carries one or more signal strength thresholds for a user equipment (UE) to determine the transmission method of the random access message.

An embodiment of the present disclosure provides an apparatus for determining a transmission method of a random access message, applied to a network device. As shown in FIG. 24, the apparatus includes:
a communicating module 2301, configured to send signaling, where the signaling carries one or more signal strength thresholds for a user equipment (UE) to determine the transmission method of the random access message.

An embodiment of the present disclosure provides a user equipment (UE), including:
one or more processors; and
a memory configured to store executable instructions by the one or more processors;
where the one or more processors are configured to execute the executable instructions in the memory to implement the steps of the above methods.

An embodiment of the present disclosure provides a network device, including:
one or more processors; and
a memory configured to store executable instructions by the one or more processors;
where the one or more processors are configured to execute the executable instructions in the memory to implement the steps of the above methods.

An embodiment of the present disclosure provides a non-transitory computer readable storage medium storing executable instructions which, when executed by a processor, implement the steps of the above methods.

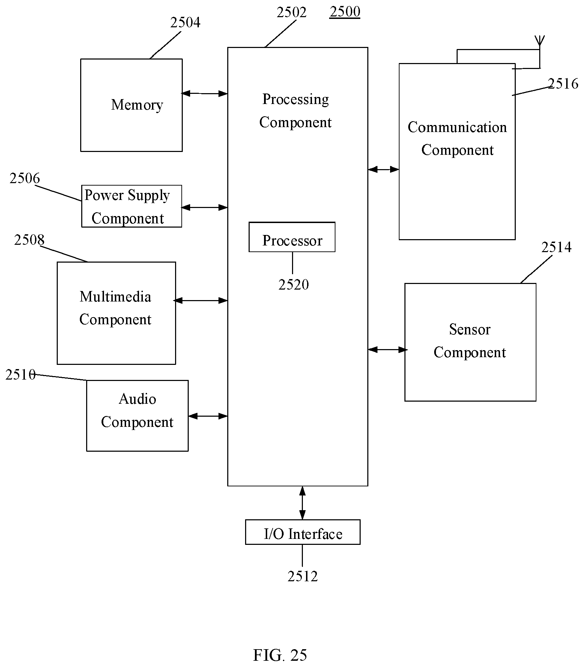

FIG. 25 is a block diagram of an apparatus 2500 for performing small data transmission (SDT) according to an exemplary embodiment. For example, the apparatus 2500 can be a mobile phone, a computer, a digital broadcasting terminal, a messaging device, a game console, a tablet device, a medical device, a fitness device, a personal digital assistant, and the like.

Referring to FIG. 25, the device 2500 can include one or more of the following components: a processing component 2502, a memory 2504, a power supply component 2506, a multimedia component 2508, an audio component 2510, an input/output (I/O) interface 2512, a sensor component 2514 and a communication component 2516.

The processing component 2502 generally controls overall operations of the device 2500, such as operations associated with display, phone calls, data communication, camera operations, and recording operations. The processing component 2502 can include one or more processors 2520 to execute instructions to complete all or part of the steps of the above methods. In addition, the processing component 2502 can include one or more modules which facilitate the interaction between the processing component 2502 and other components. For example, the processing component 2502 can include a multimedia module to facilitate the interaction between the multimedia component 2508 and the processing component 2502.

The memory 2504 is configured to store various types of data to support the operation of the device 2500. Examples of such data include instructions for any application or method operated on the device 2500, contact data, phonebook data, messages, pictures, videos, and so on. The memory 2504 can be implemented by any type of volatile or non-volatile storage devices or a combination thereof, such as a Static Random Access Memory (SRAM), an Electrically Erasable Programmable Read Only Memory (EEPROM), an Erasable Programmable Read Only Memory (EPROM), a Programmable Read Only memory (PROM), a Read Only Memory (ROM), a magnetic memory, a flash memory, a magnetic or an optical disk.

The power supply component 2506 provides power to various components of the device 2500. The power supply component 2506 may include a power management system, one or more power supplies, and other components associated with generating, managing, and distributing power for the device 2500.

The multimedia component 2508 includes a screen providing an output interface between the device 2500 and a user. In some examples, the screen may include a liquid crystal display (LCD) and a touch panel (TP). If the screen includes the TP, the screen can be implemented as a touch screen to receive input signals from the user. The TP includes one or more touch sensors to sense touches, swipes, and gestures on the TP. The touch sensor may not only sense a boundary of a touch or swipe, but also sense a lasting time and a pressure associated with the touch or swipe. In some embodiments, the multimedia component 2508 can include a front camera and/or a rear camera. The front camera and/or rear camera may receive external multimedia data when the device 2500 is in an operating mode, such as a photographing mode or a video mode. Each of the front camera and the rear camera can be a fixed optical lens system or have focal length and optical zooming capability.

The audio component 2510 is configured to output and/or input an audio signal. For example, the audio component 2510 includes a microphone (MIC). When the device 2500 is in an operating mode, such as a call mode, a recording mode, and a voice recognition mode, the MIC is configured to receive an external audio signal. The received audio signal may be further stored in the memory 2504 or transmitted via the communication component 2516. In some embodiments, the audio component 2510 further includes a speaker to output an audio signal.

The I/O interface 2512 can provide an interface between the processing component 2502 and peripheral interface modules. The above peripheral interface modules may include a keyboard, a click wheel, buttons and so on. These buttons can include, but are not limited to, a home button, a volume button, a starting button and a locking button.

The sensor component 2514 includes one or more sensors to provide status assessments of various aspects for the device 2500. For example, the sensor component 2514 can detect the on/off status of the device 2500, and relative positioning of component, for example, the component is a display and a keypad of the device 2500. The sensor component 2514 may also detect a change in position of the device 2500 or a component of the device 2500, a presence or absence of the contact between a user and the device 2500, an orientation or an acceleration/deceleration of the device 2500, and a change in temperature of the device 2500. The sensor component 2514 can include a proximity sensor configured to detect the presence of a nearby object without any physical contact. The sensor component 2514 can further include an optical sensor, such as a Complementary Metal Oxide Semiconductor (CMOS) or Charge-coupled Device (CCD) image sensor which is used in imaging applications. In some embodiments, the sensor component 2514 can further include an acceleration sensor, a gyroscope sensor, a magnetic sensor, a pressure sensor, or a temperature sensor.

The communication component 2516 is configured to facilitate wired or wireless communication between the device 2500 and other devices. The device 2500 can access a wireless network that is based on communication standards, such as Wi-Fi, 2G, 3G, or a combination thereof. In an exemplary embodiment, the communication component 2516 receives a broadcast signal or broadcast-associated information from an external broadcast management system via a broadcast channel. In an exemplary embodiment, the communication component 2516 further includes a Near Field Communication (NFC) module to facilitate short-range paging. For example, the NFC module can be implemented based on a Radio Frequency Identification (RFID) technology, an Infrared Data Association (IrDA) technology, an Ultra-Wide Band (UWB) technology, a Blue Tooth (BT) technology and other technologies.

In an exemplary embodiment, the device 2500 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, microcontrollers, microprocessors, or other electronic components for performing the above methods.

In an exemplary embodiment, there is also provided a non-transitory machine readable storage medium including instructions, such as the memory 2504 including instructions. The instructions may be executed by the processor 2520 of the device 2500 to perform the above methods. For example, the non-transitory machine readable storage medium can be a ROM, a Random Access Memory (RAM), a CD-ROM, a magnetic tape, a floppy disk, an optical data storage device, and the like.

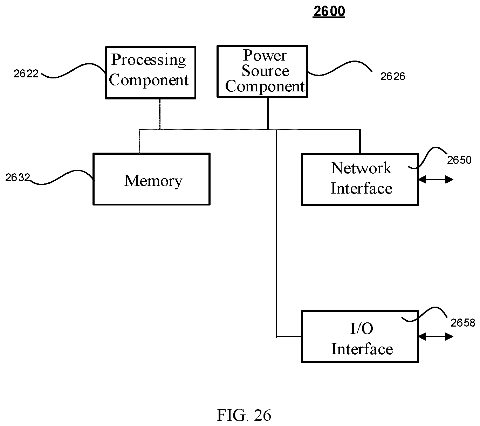

FIG. 26 is a block diagram of an apparatus 2600 for performing small data transmission (SDT) according to an exemplary embodiment. For example, the apparatus 2600 may be provided as transfer equipment. Referring to Fig. 30, the apparatus 2600 includes a processing component 2622 which further includes one or more processors, and a memory resource represented by a memory 2632, configured to store instructions such as application programs executable by the processing component 2622. The application programs stored in the memory 2632 can include one or more than one modules, each of which corresponds to a set of instructions. In addition, the processing component 2622 is configured to execute the instructions to perform the above methods for performing the SDT.

The apparatus 2600 can further include a power source component 2626 configured to execute power management of the apparatus 2600, a wired or wireless network interface 2650 configured to connect the apparatus 2600 to a network, and an I/O interface 2659. The apparatus 2600 can be operated on the basis of an operating system stored in the memory 2632, such as Windows ServerTM, Mac OS XTM, UnixTM, LinuxTM or FreeBSDTM.

Other implementations of the present disclosure will be apparent to those skilled in the art from consideration of the specification and practice of the present disclosure herein. The present disclosure is intended to cover any variations, uses, adaptive changes of the embodiments of the present disclosure that follow the general principles thereof and include common knowledge or conventional technical means in the art that are not disclosed in the present disclosure. The specification and examples are considered as exemplary only, with a true scope and spirit of the embodiments of the present disclosure being indicated by the following claims.

It should be understood that the present disclosure is not limited to the above described structures shown in the drawings, and various modifications and changes can be made to the present disclosure without departing from the scope thereof. The scope of the embodiments of the present disclosure is limited only by the appended claims.

### INDUSTRY APPLICABILITY

When determining to perform the SDT, in addition to considering the signal strength of the signal of received by the UE, the UE also refers to its CE capability, thus being suitable for the UE with the CE capability to perform the SDT. In addition, when determining the transmission method of the random access message, in addition to considering the signal strength of the signal of received by the UE, the UE also refers to its CE capability, thus being suitable for the UE with the CE capability to determine the transmission method of the random access message.

## Claims

1. A method for performing small data transmission (SDT), performed by a user equipment (UE), the method comprising:
measuring a signal strength of a downlink signal;
based on whether the UE has a coverage enhancement (CE) capability, obtaining one or more signal strength thresholds related to the SDT and corresponding to the UE; and
performing the SDT based on the signal strength and the one or more signal strength thresholds.

2. The method according to claim 1, wherein, based on whether the UE has the CE capability, obtaining the one or more signal strength thresholds related to the SDT and corresponding to the UE, comprises:
in response to the UE having the CE capability, obtaining a first threshold as the one or more signal strength thresholds of the UE.

3. The method according to claim 1, wherein, based on whether the UE has the CE capability, obtaining the one or more signal strength thresholds related to the SDT and corresponding to the UE, comprises:
in response to the UE not having the CE capability, obtaining a second threshold as the one or more signal strength thresholds of the UE.

4. The method according to claim 2, wherein performing the SDT based on the signal strength and the one or more signal strength thresholds comprises:
in response to the signal strength being greater than or equal to the first threshold, performing the SDT based on a 4-step random access channel (4-step RACH).

5. The method according to claim 3, wherein performing the SDT based on the signal strength and the one or more signal strength thresholds comprises:
in response to the signal strength being greater than or equal to the second threshold, performing the SDT based on a 4-step random access channel (4-step RACH).

6. The method according to claim 4 or 5, wherein the first threshold is smaller than the second threshold.

7. The method according to claim 1, wherein, based on whether the UE has the CE capability, obtaining the one or more signal strength thresholds related to the SDT and corresponding to the UE, comprises:
in response to the UE having the CE capability, obtaining a first threshold and a third threshold as the one or more signal strength thresholds of the UE;
wherein performing the SDT based on the signal strength and the one or more signal strength thresholds comprises:
in response to the signal strength being greater than or equal to the first threshold and smaller than the third threshold, enabling the CE capability of the UE and performing the SDT.

8. The method according to claim 1, wherein, based on whether the UE has the CE capability, obtaining the one or more signal strength thresholds related to the SDT and corresponding to the UE, comprises:
in response to the UE having the CE capability, obtaining a third threshold and a fourth threshold as the one or more signal strength thresholds of the UE;
wherein performing the SDT based on the signal strength and the one or more signal strength thresholds comprises:
in response to the signal strength being greater than or equal to the third threshold and smaller than the fourth threshold, disabling the CE capability of the UE and performing the SDT.

9. The method according to any one of claims 5, 7 or 8, wherein the third threshold is greater than or equal to the second threshold.

10. The method according to claim 1, wherein, based on whether the UE has the CE capability, obtaining the one or more signal strength thresholds related to the SDT and corresponding to the UE, comprises:
in response to the UE having the CE capability, obtaining a fourth threshold as the one or more signal strength thresholds of the UE.

11. The method according to claim 10, wherein performing the SDT based on the signal strength and the one or more signal strength thresholds comprises:
in response to the signal strength being greater than the fourth threshold, performing the SDT based on a 2-step random access channel (2-step RACH).

12. The method according to claim 1, wherein, based on whether the UE has the CE capability, obtaining the one or more signal strength thresholds related to the SDT and corresponding to the UE, comprises:
in response to the UE not having the CE capability, obtaining a second threshold and a fifth threshold as the one or more signal strength thresholds of the UE;
wherein performing the SDT based on the signal strength and the one or more signal strength thresholds comprises:
in response to the signal strength being greater than or equal to the second threshold and smaller than the fifth threshold, performing the SDT.

13. The method according to claim 1, wherein, based on whether the UE has the CE capability, obtaining the one or more signal strength thresholds related to the SDT and corresponding to the UE, comprises:
in response to the UE not having the CE capability, obtaining a fifth threshold as the one or more signal strength thresholds of the UE;
wherein performing the SDT based on the signal strength and the one or more signal strength thresholds comprises:
in response to the signal strength being greater than or equal to the fifth threshold, performing the SDT based on a 2-step random access channel (2-step RACH).

14. The method according to claim 1, wherein obtaining the one or more signal strength thresholds related to the SDT and corresponding to the UE comprises:
receiving signaling from a network device, wherein the signaling carries the one or more signal strength thresholds corresponding to the UE.

15. The method according to claim 14, wherein the signaling comprises at least one of: minimum remaining system information (RMSI), main information block (MIB), radio resource control (RRC), other system information (OSI), downlink control information (DCI), or media access control-control element (MAC-CE).

16. A method for determining a transmission method of a random access message, performed by a user equipment (UE), the method comprising:
measuring a signal strength of a downlink signal;
based on whether the UE has a coverage enhancement (CE) capability, obtaining one or more signal strength thresholds related to the transmission method of the random access message and corresponding to the UE; and
based on the signal strength and the one or more signal strength thresholds, determining the transmission method of the random access message to be a first transmission method or a second transmission method.

17. The method according to claim 16, wherein, based on whether the UE has the CE capability, obtaining the one or more signal strength thresholds related to the transmission method of the random access message and corresponding to the UE, comprises:
in response to the UE having the CE capability, obtaining a sixth threshold as the one or more signal strength thresholds of the UE;
wherein, based on the signal strength and the one or more signal strength thresholds, determining the transmission method of the random access message to be the first transmission method or the second transmission method, comprises:
in response to the signal strength being greater than or equal to the sixth threshold, determining the transmission method of the random access message to be the first transmission method; or
in response to the signal strength being smaller than the sixth threshold, determining the transmission method of the random access message to be the second transmission method.

18. The method according to claim 16, wherein, based on whether the UE has the CE capability, obtaining the one or more signal strength thresholds related to the transmission method of the random access message and corresponding to the UE, comprises:
in response to the UE not having the CE capability, obtaining a seventh threshold as the one or more signal strength thresholds of the UE;
wherein, based on the signal strength and the one or more signal strength thresholds, determining the transmission method of the random access message to be the first transmission method or the second transmission method, comprises:
in response to the signal strength being greater than or equal to the seventh threshold, determining the transmission method of the random access message to be the first transmission method; or
in response to the signal strength being smaller than the seventh threshold, determining the transmission method of the random access message to be the second transmission method.

19. The method according to claim 17 or 18, wherein the sixth threshold is smaller than the seventh threshold.

20. The method according to claim 16, wherein, based on whether the UE has the CE capability, obtaining the one or more signal strength thresholds related to the transmission method of the random access message and corresponding to the UE, comprises:
in response to the UE having the CE capability, obtaining a sixth threshold and an eighth threshold as the one or more signal strength thresholds of the UE;
wherein, based on the signal strength and the one or more signal strength thresholds, determining the transmission method of the random access message to be the first transmission method or the second transmission method, comprises:
in response to the signal strength being greater than or equal to the sixth threshold and smaller than the eighth threshold, enabling the CE capability of the UE, and determining the transmission method of the random access message to be the first transmission method.

21. The method according to claim 16, wherein, based on whether the UE has the CE capability, obtaining the one or more signal strength thresholds related to the transmission method of the random access message and corresponding to the UE, comprises:
in response to the UE having the CE capability, obtaining an eighth threshold as the one or more signal strength thresholds of the UE;
wherein, based on the signal strength and the one or more signal strength thresholds, determining the transmission method of the random access message to be the first transmission method or the second transmission method, comprises:
in response to the signal strength being greater than or equal to the eighth threshold, disabling the CE capability of the UE, and determining the transmission method of the random access message to be the first transmission method.

22. The method according to claim 16, wherein obtaining the one or more signal strength thresholds related to the transmission method of the random access message and corresponding to the UE comprises:
receiving signaling from a network device, wherein the signaling carries the one or more signal strength thresholds corresponding to the UE.

23. The method according to claim 22, wherein the signaling comprises at least one of: minimum remaining system information (RMSI), main information block (MIB), radio resource control (RRC), other system information (OSI), downlink control information (DCI), or media access control-control element (MAC-CE).

24. A method for performing small data transmission (SDT), performed by a network device, the method comprising:
sending signaling, wherein the signaling carries one or more signal strength thresholds for a user equipment (UE) to determine whether to perform the SDT.

25. The method according to claim 24, wherein the one or more signal strength thresholds comprise at least one of: a first threshold, a second threshold, a third threshold, a fourth threshold, or a fifth threshold.

26. A method for determining a transmission method of a random access message, performed by a network device, the method comprising:
sending signaling, wherein the signaling carries one or more signal strength thresholds for a user equipment (UE) to determine the transmission method of the random access message.

27. The method according to claim 26, wherein the one or more signal strength thresholds comprise at least one of: a sixth threshold, a seventh threshold, or an eighth threshold.

28. An apparatus for performing small data transmission (SDT), applied to a user equipment (UE), the apparatus comprising:
a communicating module, configured to receive a downlink signal; and
a processing module, configured to, measure a signal strength of the downlink signal; based on whether the UE has a coverage enhancement (CE) capability, obtain one or more signal strength thresholds related to the SDT and corresponding to the UE; and perform the SDT based on the signal strength and the one or more signal strength thresholds.

29. An apparatus for determining a transmission method of a random access message, applied to a user equipment (UE), the apparatus comprising:
a communicating module, configured to receive a downlink signal; and
a processing module, configured to, measure a signal strength of the downlink signal; based on whether the UE has a coverage enhancement (CE) capability, obtain one or more signal strength thresholds related to the transmission method of the random access message and corresponding to the UE; and based on the signal strength and the one or more signal strength thresholds, determine the transmission method of the random access message to be a first transmission method or a second transmission method.

30. An apparatus for performing small data transmission (SDT), applied to a network device, the apparatus comprising:
a communicating module, configured to send signaling, wherein the signaling carries one or more signal strength thresholds for a user equipment (UE) to determine the transmission method of the random access message.

31. An apparatus for determining a transmission method of a random access message, applied to a network device, the apparatus comprising:
a communicating module, configured to send signaling, wherein the signaling carries one or more signal strength thresholds for a user equipment (UE) to determine the transmission method of the random access message.

32. A user equipment (UE), comprising:
one or more processors; and
a memory configured to store executable instructions by the one or more processors;
wherein the one or more processors are configured to execute the executable instructions in the memory to implement the steps of the method according to any one of claims 1 to 15 or claims 16 to 23.

33. A network device, comprising:
one or more processors; and
a memory configured to store executable instructions by the one or more processors;
wherein the one or more processors are configured to execute the executable instructions in the memory to implement the steps of the method according to any one of claims 24 to 25 or claims 26 to 27.

34. A non-transitory computer readable storage medium storing executable instructions which, when executed by a processor, implement the steps of the method according to any one of claims 1 to 15, claims 16 to 23, claims 24 to 25, or claims 26 to 27.
